# EUROPEAN PATENT SPECIFICATION

(11) **EP 4 286 155 B1**
(45) Date of publication and mention of the grant of the patent: **27.08.2025**
(21) Application number: 22749590.0
(22) Date of filing: 27.01.2022
(51) Int. Cl.: B32B 27/00

(54) **DECORATIVE SHEET**
DEKORFOLIE
FEUILLE DÉCORATIVE

(30) Priority: 02.02.2021 JP 2021015152
(43) Date of publication of application: 06.12.2023
(73) Proprietor: C.I. TAKIRON Corporation, Kita-Ku Osaka-Shi Osaka 530-0001 (JP)
(72) Inventor: KANEKO, Jun, Osaka-shi, Osaka 530-0001 (JP); BABA, Makoto, Osaka-shi, Osaka 530-0001 (JP); ITOU, Shintarou, Osaka-shi, Osaka 530-0001 (JP)
(74) Representative: advotec.
(86) International application number: PCT/JP2022/002986
(87) International publication number: WO 2022/168716

(56) References cited:
- JP-A- 2005 343 114
- JP-A- 2012 048 246
- JP-A- 2012 116 219
- JP-A- 2013 018 292
- JP-A- 2018 012 257
- JP-A- 2018 012 257
- US-A1- 2016 052 244

## Description

### TECHNICAL FIELD

The present disclosure relates to a decorative sheet.

### BACKGROUND ART

Stainless steel sheets with excellent design properties have been widely used for home appliances. However, these stainless steel sheets are hard and require special jigs and molds for molding, so that conventional molding jigs, molds, and molding methods cannot be used as they are. Further, the surface of the stainless steel sheet is prone to have fingerprints, and there is a drawback that the appearance is remarkably impaired at a portion frequently touched by human hands.

Therefore, in order to improve the appearance and protect the surface, a metallic decorative sheet having excellent brightness and design properties has been proposed. For example, a metallic decorative film with hairlines has been proposed, which includes a base film (polyester film) with a hairline finish on one surface, a vapor-deposited metal layer on the hairline-finish surface, and a thermoplastic resin film on the metal vapor-deposited surface via an adhesive layer. It is stated that such metallic decorative film makes it possible to provide a metallic decorative film with improved hairline design properties and excellent fingerprint resistance and scratch resistance without impairing moldability (see, for example, Patent Document 1). Patent Document 2 discloses a decorative sheet comprising: a laminate including an amorphous-state resin layer which is preferably made of an ABS resin, a vapor-deposited metal layer provided on a surface thereof, and a primer layer provided on a surface of the vapor-deposited metal layer, and a transparent resin layer provided on a side of the laminate closer to the primer layer.

Patent Document 3 discloses a decorative sheet comprising: a laminate including an amorphous-state resin layer, a vapor-deposited metal layer provided on a surface of the amorphous-state resin layer, and a transparent resin layer provided on a side of the laminate closer to the primer layer.

### CITATION LIST

### PATENT DOCUMENT

Patent Document 1: Japanese Unexamined Patent Publication No. 2005-169740
Patent Document 2 : US 2016/052244 A1
Patent Document 3 : JP 2018 012257 A

### SUMMARY OF THE INVENTION

### TECHNICAL PROBLEM

However, the decorative film described in Patent Document 1 has a problem in that peeling occurs at the interface between the polyester film and the vapor-deposited metal layer because the adhesion between the polyester film and the vapor-deposited metal layer is poor. In particular, the decorative film described in Patent Document 1 has a problem in that printing is additionally required in order to impart design properties other than the hairlines, and when printing is performed, instead of hairline finish, on the surface where the hairline finish is performed (i.e., on the surface facing the vapor-deposited metal layer) (that is, when providing a print layer between the polyester film and the vapor-deposited metal layer), the adhesion between the polyester film and vapor-deposited metal layer decreases, causing peeling at the interface between the polyester film and the vapor-deposited metal layer.

The present disclosure was made in view of the above problems, and an object of the present disclosure is to provide a decorative sheet having excellent design properties and excellent adhesion between a base film and a vapor-deposited metal layer.

### SOLUTION TO THE PROBLEM

According to the present invention, such object is achieved by a decorative having the characteristics of claims 1 or 7. Further, preferred embodiments are covered by the dependent claims.

### ADVANTAGES OF THE INVENTION

In the decorative sheet according to the present disclosure, the vapor-deposited metal layer is provided on the surface of the amorphous-state resin layer, which is a base film. This configuration can improve adhesion between the base film and the vapor-deposited metal layer. Further, the primer layer is provided between the transparent resin layer and the vapor-deposited metal layer which are low in adhesion, and the adhesive layer is further provided between the transparent resin layer and the primer layer, so that the transparent resin layer and the vapor-deposited metal layer can be stacked apart from each other via the primer layer having higher adhesion to the adhesive layer as compared with the vapor-deposited metal layer. It is thus possible to avoid the peeling at the interface between the transparent resin layer and the vapor-deposited metal layer reliably.

In another decorative sheet according to the present disclosure, the vapor-deposited metal layer is provided on the surface of the amorphous-state resin layer, which is a base film. This configuration can improve adhesion between the base film and the vapor-deposited metal layer. Further, the adhesive layer serving also as the primer layer is provided between the transparent resin layer and the vapor-deposited metal layer which are low in adhesion, so that the transparent resin layer and the vapor-deposited metal layer can be stacked apart from each other via the adhesive layer without additionally providing a primer layer. It is thus possible to avoid the peeling at the interface between the transparent resin layer and the vapor-deposited metal layer reliably.

### BRIEF DESCRIPTION OF THE DRAWINGS

FIG. 1 is a sectional view of a decorative sheet according to a first embodiment of the present disclosure.
FIG. 2 is a sectional view of the decorative sheet according to the first embodiment of the present disclosure where a vapor-deposited metal layer has fine pores.
FIG. 3 is a sectional view of a decorative sheet according to a second embodiment of the present disclosure.
FIG. 4 is a sectional view of the decorative sheet according to the second embodiment of the present disclosure where a vapor-deposited metal layer has fine pores.

### DESCRIPTION OF EMBODIMENTS

The decorative sheet according to the present disclosure will be described in detail below. It should be noted that the present disclosure is not limited to the following embodiments and can be appropriately modified and applied without departing from the scope of the present disclosure.

### (First Embodiment)

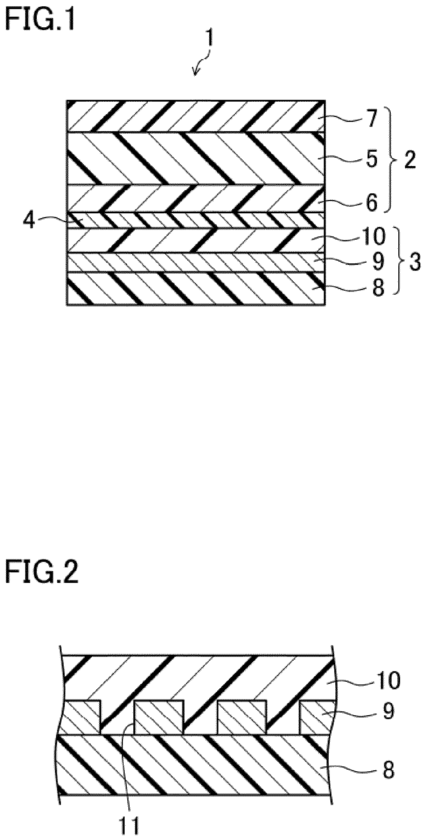

As illustrated in FIG. 1, a decorative sheet 1 according to the present embodiment includes a surface layer 2, a backer layer 3 provided on the back surface of the surface layer 2, and an adhesive layer 4 provided between the surface layer 2 and the backer layer 3.

### <Surface Layer>

The surface layer 2 is a layer to prevent scratches and the like on the surface of the decorative sheet 1, and is, as illustrated in FIG. 1, a laminate including a transparent resin layer 5, which is a surface base layer, a print layer 6 provided on the back surface of the transparent resin layer 5, and a hard-coat layer 7 provided on the front surface of the transparent resin layer 5.

### (Transparent Resin Layer)

As illustrated in FIG. 1, the transparent resin layer 5 is provided on the side of the backer layer 3 closer to the primer layer 10, and the transparent resin layer 5 used is a film made from resin having transparency and including, as a main component, a polyethylene terephthalate-based resin or polyvinyl chloride resin. The film preferably has excellent surface hardness and chemical resistance, and examples thereof include stretched polyethylene terephthalate film. In order to ensure durability such as solvent resistance and heat resistance, versatility, smoothness, and other properties in order to provide the hard-coat layer 7 on the surface of the transparent resin layer 5, the film is preferably a biaxially stretched polyethylene terephthalate film.

The transparent resin layer 5 has a thickness of preferably 20 µm to 300 µm, more preferably 50 µm to 200 µm. When the thickness of the transparent resin layer 5 is 20 µm or more, the thickness from the front surface of the transparent resin layer 5 to the print layer 6 becomes large, so that it is possible to secure design properties having a sense of greater depth (having a greater quality appearance), improve the appearance and surface performance as the decorative sheet, and avoid the occurrence of scratches on the print layer 6. In addition, the thickness of the transparent resin layer 5 of 300 µm or less is advantageous in terms of cost and allows improvement in workability at the time of bending (avoidance of spring-back).

The transparent resin layer 5 may be provided with a coating layer, a transfer layer, or another layer in light of imparting an antifouling property and whether resistance to the transparent resin layer 5.

### (Print Layer)

The print layer 6 is a layer to enhance design properties of the decorative sheet 1, and is provided on a surface of the transparent resin layer 5 closer to the backer layer 3 (i.e., a surface closer to the primer layer 10) by printing. Examples of patterns and designs formed by the printing in the print layer 6 include a wood grain pattern, a stone grain pattern, a texture pattern, a sand grain pattern, a tiling design, a brickwork design, a leather grain design, a geometric design, a character, a symbol, a metallic design, etc. One of these patterns and designs may be formed alone, or two or more types of the patterns and designs may be formed in combination.

Examples of the method of the printing include gravure printing, screen printing, flexographic printing, letterpress printing, inkjet printing, etc.

The ink used in the print layer 6 contains a binder resin and a colorant. Examples of the binder resin include an acrylic resin, a vinyl chloride-vinyl acetate copolymer, chlorinated polypropylene, a polyester resin, a cellulose-based resin, a urethane-based resin, etc. Examples of the colorant include: inorganic pigments such as titanium white, zinc oxide, carbon black, iron black, red iron oxide, chrome vermilion, cadmium red, ultramarine blue, cobalt blue, chrome yellow, and titanium yellow; organic pigments such as phtalocyanine blue, indanthrene blue, isoindolinone yellow, benzidine yellow, quinacridone red, polyazo red, perylene red, and aniline black; and pearlescent (pearl) pigments such as flaky powders of aluminum, brass, or others. One kind of these colorants may be used alone, or two or more kinds of the colorants may be used in combination.

The ink used in the print layer 6 may further contains, if necessary, additives such as an ultraviolet absorber, a light stabilizer, an antioxidant, an antistat, a storage stabilizer, a plasticizer, a lubricant, and a filler. The print layer 6 has a thickness of preferably 0.1 µm to 10 µm.

### (Hard-Coat Layer)

The hard-coat layer 7 is a layer to further enhance the avoidance of scratches and the like on the surface of the decorative sheet 1 and has a pencil hardness higher than HB. The hard-coat layer 7 is a layer formed from an active energy ray-curable resin which is polymerized by irradiation with an active energy ray (an ultraviolet ray or an electron ray).

Examples of the active energy ray-curable resin include a polyfunctional (meth)acrylate having two or more (meth)acryloyl groups in a molecule and a monofunctional (meth)acrylate having one (meth)acryloyl group in a molecule.

Examples of the polyfunctional (meth)acrylate having two or more (meth)acryloyl groups in a molecule include: polyol poly(meth)acrylates, such as neopentyl glycol di(meth)acrylate, 1,6-hexanediol diacrylate, (meth)trimethylolpropane tri(meth)acrylate, ditrimethylolpropane tetra(meth)acrylate, pentaerythritol tetra(meth)acrylate, pentaerythritol tri(meth)acrylate, di-pentaerythritol penta(meth)acrylate, and di-pentaerythritol hexa(meth)acrylate; epoxy(meth)acrylates such as bisphenol A diglycidyl ether di(meth)acrylate, di(meth)acrylate of neopentyl glycol diglycidyl ether, and di(meth)acrylate of 1,6-hexanediol diglycidyl ether; polyester(meth)acrylate obtained by esterifying a polyhydric alcohol, polyvalent carboxylic acid and/or anhydride thereof, and (meth)acrylic acid; urethan(meth)acrylate obtained by reacting polyhydric alcohol, polyvalent isocyanate, and hydroxyl group-containing (meth)acrylate; and polysiloxane poly(meth)acrylate, etc.

Examples of the monofunctional (meth)acrylate include hydroxyethyl (meth)acrylate, 2-hydroxyethyl (meth)acrylate, 3-hydroxypropyl (meth)acrylate, 4-hydroxybutyl (meth)acrylate, 2-hydroxy-3-phenoxypropyl (meth)acrylate, glycidyl (meth)acrylate, etc.

One kind of these monofunctional (meth)acrylates may be used alone, or two or more of them may be used in combination.

The hard-coat layer 7 has a thickness of preferably 1 µm to 30 µm, more preferably 2 µm to 20 µm. When the thickness of the hard-coat layer 7 is 1 µm or more, the occurrence of scratches on the decorative sheet 1 can be effectively avoided, and when the thickness is 30 µm or less, the cracks in the hard-coat layer 7 can be avoided.

### <Adhesive Layer>

The adhesive layer 4 is a layer to adhere the surface layer 2 and the backer layer 3, and is provided between the surface layer 2 and the backer layer 3.

As an adhesive forming the adhesive layer 4, adhesives commonly used in the adhesive layer of the decorative sheet can be used. The adhesive forming the adhesive layer 4 may be a two-component curable adhesive, one-component curable adhesive, or an ultraviolet curable adhesive.

Specific examples of the adhesive include heat-sealing resins, such as a polyester-based resin, a polyurethane-based resin, a polyester-polyurethane-based resin, an acrylic resin, an ethylene-vinyl acetate copolymer. Among them, the polyester-based resin or the polyester-polyurethane-based resin is preferable. One kind of these adhesives may be used alone, or two or more kinds of them may be used in combination. The adhesive may contain a curing agent such as isocyanate, and is preferably a polyester-based resin containing isocyanate as a curing agent in light of improving the appearance and adhesion strength of the decorative sheet 1. In addition, it is preferable that the adhesive layer 4 does not contain a colorant, i.e., is colorless.

The adhesive layer 4 has a thickness of preferably 2 µm to 30 µm, more preferably 5 µm to 15 µm. Specifically, when the thickness of the adhesive layer 4 is 5 µm or more, the surface layer 2 and the backer layer 3 can be adhered to each other with sufficient adhesion strength. In addition, when the thickness of the adhesive layer 4 is 15 µm or less, the influence on the transparency and the manufacturing cost of the decorative sheet 1 is small, and the combustibility can be reduced.

### <Backer Layer>

The backer layer 3 is a layer to improve design properties of the decorative sheet 1, and is, as illustrated in FIG. 1, a laminate including an amorphous-state resin layer 8, which is a base layer, a vapor-deposited metal layer 9 provided on the surface of the amorphous-state resin layer 8, and a primer layer 10 provided on the surface of the vapor-deposited metal layer 9.

### (Amorphous-State Resin Layer)

The amorphous-state resin layer 8 is a resin layer formed from an amorphous-state resin. The "amorphous-state resin" herein encompasses an amorphous resin and an amorphous-state, crystalline resin.

The "amorphous resin" refers to resin having only a glass transition point, wherein molecular chains are arranged randomly, and examples thereof include a polystyrene (PS) resin, a polyvinyl chloride (PVC) resin, an acrylonitrile styrene (AS) resin, an acrylonitrile-butadienestyrene (ABS) resin, a polymethyl methacrylate (PMMA) resin, a polycarbonate (PC) resin, a modified polyphenylene ether (PPE) resin, and a glycol-modified polyethylene terephthalate (PETG) resin, etc.

The "amorphous-state, crystalline resin" refers to resin in the amorphous-state made by processing (e.g., quenching from the molten state of) crystalline resin, and examples thereof include an "amorphous-state, crystalline polyethylene terephthalate (APET) resin" and a "recycled polyethylene terephthalate (hereinafter also referred to as "RPET") resin" described in paragraph [0011] of Japanese Patent No. 4760356, and the like.

The recycled PET resin is a recycled resin derived from PET bottles, and is preferably ground products of PET bottles in terms of inexpensiveness and easier availability. The recycled PET resin may contain ground products of labels (including printing, an adhesive, and the like) and caps attached to the PET bottles as long as the effect of the present disclosure is not impaired. The amorphous-state resin layer 8 may contain the recycled PET resin in the range from 50 mass% to 100 mass% inclusive.

The transparent resin layer 5 may be made from a resin material containing the recycled PET resin. In this case, the transparent resin layer 5 may contain the recycled PET resin in the range from 50 mass% to 95 mass% inclusive.

The content of the recycled PET resin in the entire decorative sheet 1 may be from 50 mass% to 95 mass% inclusive. Since the resin component of the decorative sheet 1 according to the present embodiment contains 50 mass% or more of recycled PET resin derived from PET bottles, it is possible to provide a decorative sheet 1 which is more environmentally friendly than a decorative sheet in which the proportion of the recycled resin in the entire resin component is low.

The amorphous-state resin layer 8 has a thickness of preferably 50 µm to 500 µm, more preferably 80 µm to 350 µm. The amorphous-state resin layer 8 having a thickness of 50 µm or more makes it possible to avoid breakage of the decorative sheet 1 due to small stress (e.g., the stress of 15N or less), and to reduce, at the time when the amorphous-state resin layer 8 is adhered to a substrate such as wood to which the decorative sheet 1 is attached, an influence of irregularities on the surface of the substrate and the like. In addition, the amorphous-state resin layer 8 having the thickness of 500 µm or less makes it possible to improve workability (prevent spring-back) in bending.

The amorphous-state resin layer 8 may be a color layer containing a color pigment. The color layer used as the amorphous-state resin layer 8 can reliably hide the color of the substrate such as wood to which the decorative sheet 1 is attached. The color pigment is not particularly limited and can be, for example, a colorant used in the print layer 6.

### (Vapor-Deposited Metal Layer)

The vapor-deposited metal layer 9 is a layer to improve brightness and design properties (metallic appearance) of the decorative sheet 1. In the decorative sheet 1 according to the present embodiment, as illustrated in FIG. 1, the vapor-deposited metal layer 9 is provided on the surface of the amorphous-state resin layer 8, which is a base film. Further, the vapor-deposited metal layer 9 is a thin film and has fine pores. When organic solvent components such as a primer and an adhesive are applied, the amorphous-state resin layer that is not vapor deposited is immersed directly in the organic solvent components. It is thus possible to improve the adhesion between the amorphous-state resin layer 8 and the vapor-deposited metal layer 9.

A metal material forming the vapor-deposited metal layer 9 is not particularly limited, and examples thereof include aluminum, indium, tin, chromium, zinc, gold, and silver, etc. For vapor deposition of the metal material, a physical vapor deposition such as sputtering and a known vacuum vapor deposition, a chemical vapor deposition method such as chemical vapor deposition (CVD), or the like can be used.

The vapor-deposited metal layer 9 has a thickness of preferably 0.001 µm to 0.2 µm, more preferably 0.001 µm to 0.1 µm. When the thickness of the vapor-deposited metal layer 9 is 0.001 µm or more, a metallic design property can be imparted. When the thickness of the vapor-deposited metal layer 9 is 0.2 µm or less, the cost increase can be reduced.

The vapor-deposited metal layer 9 is in the state in which metal particles are physically stacked on the base and includes fine areas where metal particles are not stacked. Further, the amorphous-state resin layer 8 is difficult to be subjected to heat treatment at high temperatures (such as annealing treatment), and metal particles are difficult to grow, resulting in the formation of gaps. Thus, as illustrated in FIG. 2, the vapor-deposited metal layer 9 has a plurality of fine pores 11.

### (Primer Layer)

The primer layer 10 is a layer to protect the vapor-deposited metal layer 9, and is provided on the surface of the vapor-deposited metal layer 9 as illustrated in FIG. 1.

The primer for forming the primer layer 10 is not particularly limited, and a two-component curable primer containing polyester-based resin as a main component, a primer containing acrylic resin and a vinyl chloride-vinyl acetate copolymer as main components, or the like can be used, for example.

The primer layer 10 has a thickness of preferably 1 µm to 10 µm, more preferably 1 µm to 5 µm. The primer layer 10 having the thickness of 1 µm or more can reliably protect the vapor-deposited metal layer 9. The primer layer having the thickness of 10 µm or less makes it possible to reduce the cost.

In the decorative sheet 1 according to the present embodiment, as illustrated in FIG. 1, the primer layer 10 is provided between the transparent resin layer 5 and the vapor-deposited metal layer 9 which are low in adhesion. Thus, the adhesive layer 4 is additionally provided between the transparent resin layer 5 and the primer layer 10. Accordingly, the transparent resin layer 5 and the vapor-deposited metal layer 9 can be stacked apart from each other via the primer layer 10 having higher adhesion to the adhesive layer 4 than the vapor-deposited metal layer 9. As a result, peeling at the interface between the transparent resin layer 5 and the vapor-deposited metal layer 9 can be reliably avoided.

Further, as mentioned above, the vapor-deposited metal layer 9 has a plurality of fine pores 11. Thus, as illustrated in FIG. 2, portions of the primer layer 10 come into contact with the amorphous-state resin layer 8 via the plurality of fine pores 11. This allows improvement in adhesion between the amorphous-state resin layer 8 and the vapor-deposited metal layer 9 by the anchor effect of the fine pores 11 without providing an undercoat layer.

### <Production Method>

Next, an example method for producing the decorative sheet 1 according to the present embodiment will be described below.

An active energy ray-curable resin is applied to one surface of a transparent resin layer 5, which is then irradiated with an active energy ray (an ultraviolet ray or an electron ray), thereby forming a hard-coat layer 7. Then, a printing ink is applied to another surface of the transparent resin layer 5, opposite to the surface on which the hard-coat layer 7 has been provided, by gravure printing or the like, thereby forming a print layer 6. Accordingly, a surface layer 2 is formed.

A color pigment is mixed into an amorphous-state resin such as a recycled PET resin, and the resultant resin mixture is molded into a sheet, thereby forming an amorphous-state resin layer 8. Next, a metal material such as aluminum is vapor-deposited on one surface of the amorphous-state resin layer 8 by vacuum vapor deposition or the like, thereby forming a vapor-deposited metal layer 9. Then, a primer is applied to the surface of the vapor-deposited metal layer 9, thereby forming a primer layer 10. Accordingly, a backer layer 3 is formed.

Next, an adhesive, which forms an adhesive layer 4, is applied to a surface of the print layer 6 in the surface layer 2. Then, the surface layer 2 and the backer layer 3 are stacked on each other via the adhesive such that the print layer 6 with the adhesive applied faces the primer layer 10 in the backer layer 3. Subsequently, the print layer 6 and the primer layer 10 are bonded to each other by dry lamination using a roller, so that the surface layer 2 and the backer layer 3 are adhered to each other. Thus, a decorative sheet 1 illustrated in FIG. 1 in which the adhesive layer 4 is provided between the transparent resin layer 5 and the primer layer 10 is produced. Since the primer layer 10 is provided on the surface of the vapor-deposited metal layer 9 in this case, the damage to the vapor-deposited metal layer 9 due to the roller can be avoided when the surface layer 2 and the backer layer 3 are adhered to each other.

Examples of methods for applying the active energy ray-curable resin, the primer, and the adhesive include gravure coating (including microgravure coating), comma coating, a roll knife coating, die coating, roll coating, reverse roll coating, and cast coating, etc.

The decorative sheet 1 having a total thickness of 530 µm or less is advantageous in terms of cost and allows improvement in workability in bending (avoidance of spring-back).

### (Second Embodiment)

Next, the second embodiment of the present disclosure will be described. The same components as those of the first embodiment are denoted by the same reference numerals, and description thereof is omitted.

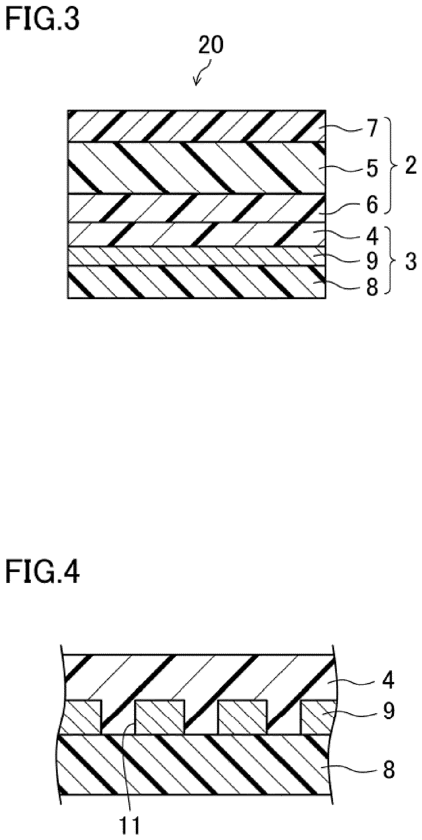

FIG. 3 is a sectional view of a decorative sheet according to the present embodiment. FIG. 4 is a sectional view of the decorative sheet according to the present embodiment where a vapor-deposited metal layer has fine pores.

As illustrated in FIG. 3, a decorative sheet 20 according to the present embodiment is configured such that an adhesive layer 4 is provided on the surface of a vapor-deposited metal layer 9, and that the adhesive layer 4 serves also as a primer layer (the primer layer 10 in the first embodiment) in a backer layer 3.

With such a configuration, in the decorative sheet 20 according to the present embodiment, as illustrated in FIG. 3, the adhesive layer 4 serving also as the primer layer 10 is provided between the transparent resin layer 5 and the vapor-deposited metal layer 9 which are low in adhesion. Therefore, as in the decorative sheet 1 according to the first embodiment described above, the transparent resin layer 5 and the vapor-deposited metal layer 9 are stacked apart from each other via the adhesive layer 4 without providing the primer layer 10 separately. As a result, peeling at the interface between the transparent resin layer 5 and the vapor-deposited metal layer 9 can be reliably avoided.

Further, as mentioned above, the vapor-deposited metal layer 9 has a plurality of fine pores 11. Thus, as illustrated in FIG. 4, portions of the adhesive layer 4 also serving as the primer layer come into contact with the amorphous-state resin layer 8 via the plurality of fine pores 11. This allows improvement in adhesion between the amorphous-state resin layer 8 and the vapor-deposited metal layer 9 by the anchor effect of the fine pores 11 without providing an undercoat layer.

In the decorative sheet 20 according to the present embodiment, the adhesive forming the adhesive layer 4 has a viscosity of from 1 mPa·s to 1000 mPa·s inclusive, preferably from 10 mPa·s to 500 mPa·s inclusive. The adhesive having the viscosity of from 1 mPa·s to 1000 mPa·s inclusive allows protection of the vapor-deposited metal layer 9 in the same manner as the primer layer 10 described above, thereby improving design properties of the decorative sheet 20.

The "viscosity" used herein refers to the viscosity of the coating liquid at the time when the adhesive is applied, measured at 25°C with a tuning fork vibration viscometer (SV viscometer).

Further, in the decorative sheet 20 according to the present embodiment, the adhesive forming the adhesive layer 4 has a surface tension of from 20 mN/m to 32 mN/m inclusive. The adhesive having the surface tension of from 20 mN/m to 32 mN/m inclusive allows the adhesive layer 4 to be provided on the surface of the vapor-deposited metal layer 9 without lowering the coatability to the vapor-deposited metal layer 9, and also allows protection of the vapor-deposited metal layer 9 in the same manner as the primer layer 10, thereby improving design properties of the decorative sheet 20.

The "surface tension" used herein refers to a surface tension of the coating liquid at the time when the adhesive is applied, measured at 25°C by a pendant-drop method (hangingdrop method).

### <Production Method>

Next, an example method for producing the decorative sheet 1 according to the present embodiment will be described below.

An active energy ray-curable resin is applied to one surface of a transparent resin layer 5, which is then irradiated with an active energy ray (an ultraviolet ray or an electron ray), thereby forming a hard-coat layer 7. Then, a printing ink is applied to another surface of the transparent resin layer 5, opposite to the surface on which the hard-coat layer 7 has been provided, by gravure printing or the like, thereby forming a print layer 6. Accordingly, a surface layer 2 is formed.

A color pigment is mixed into an amorphous-state resin such as a recycled PET resin, and the resultant resin mixture is molded into a sheet, thereby forming an amorphous-state resin layer 8. Next, a metal material such as aluminum is vapor-deposited on one surface of the amorphous-state resin layer 8 by vacuum vapor deposition or the like, thereby forming a vapor-deposited metal layer 9. Then, an adhesive forming an adhesive layer 4 is applied to the surface of the vapor-deposited metal layer 9, thereby forming the adhesive layer 4. Accordingly, a backer layer 3 is formed.

Thereafter, the surface layer 2 and the backer layer 3 are stacked on each other via the adhesive layer 4 so that the print layer 6 and the vapor-deposited metal layer 9 in the backer layer 3 face each other. Subsequently, the print layer 6 and the adhesive layer 4 are bonded to each other by dry lamination using a roller, so that the surface layer 2 and the backer layer 3 are adhered to each other. Thus, a decorative sheet 20 illustrated in FIG. 3 in which the adhesive layer 4 serving also as the primer layer is provided between the transparent resin layer 5 and the vapor-deposited metal layer 9 is produced. Since the adhesive layer 4 also serving as the primer layer is provided on the surface of the vapor-deposited metal layer 9 in this case, the damage to the vapor-deposited metal layer 9 due to the roller can be avoided when the surface layer 2 and the backer layer 3 are adhered to each other.

The same or similar methods as those described in the first embodiment can be used as methods for applying the active energy ray-curable resin, the primer, and the adhesive.

Similarly to the decorative sheet 1 according to the first embodiment described above, the decorative sheet 20 having a total thickness of 530 µm or less is advantageous in terms of cost and allows improvement in workability at the time of bending (avoidance of spring-back).

### [Examples]

The present disclosure will be described below based on the Examples of the present disclosure. Note that the present disclosure shall not be limited to these examples. These examples may be modified and changed based on the intent of the present disclosure. Such a change and modification shall not be excluded from the scope of the present disclosure.

Materials used for production of a decorative sheet are shown below:
(1) an ultraviolet curable resin (manufactured by DIC Graphics Corporation, trade name: DR2WB-1);
(2) a transparent resin film A (a biaxially stretched PET film, manufactured by TOYOBO CO., LTD., trade name: COSMOSHINE A4300, thickness: 100 µm, crystalline);
(3) a transparent resin film B (a biaxially stretched RPET film, manufactured by TOYOBO CO., LTD., trade name: RESHINE TA065, thickness: 50 µm, crystalline);
(4) a transparent resin film C (a film containing, as a main component, a polyvinyl chloride resin (manufactured by Taiyo Vinyl Corporation, trade name: E-650), thickness: 60 µm, amorphous);
(5) a transparent resin film D (a biaxially stretched PET film, manufactured by Du Pont, trade name: Mylar816, thickness: 12 µm, crystalline);
(6) a two-component curable adhesive (manufactured by Dainichiseika Color & Chemicals Mfg. Co., Ltd., trade name: polyesterpolyol/polyisocyanate-based two component curable adhesive for dry lamination, main agent: SEIKABOND E-295NT (100 parts by mass), curing agent: SEIKABOND C-75N-1.5 (10 parts by mass), solvent: ethyl acetate, diluted to 19 seconds with a Zahn cup #3 (a solid content: about 30%));
(7) a gravure printing ink (manufactured by DIC Graphics Corporation, trade name: XS ink);
(8) a colored resin film A (a film in which a PETG resin (manufactured by Eastman Chemical Company, trade name: GN071) as a main component contains a color pigment added thereto, thickness: 100 µm, amorphous);
(9) a colored resin film B (a film in which an RPET-based resin (manufactured by ALIPLAST, trade name: Alimpet) as a main component contains a color pigment added thereto, thickness: 150 µm, amorphous);
(10) a colored resin film C (a film in which a polyvinyl chloride resin (manufactured by Taiyo Vinyl Corporation, trade name: TE-650) as a main component contains a color pigment added thereto, thickness: 150 µm, amorphous);
(11) a vapor-deposited aluminum layer (thickness: 60 nm);
(12) a primer A (manufactured by NIPPON KAKO TORYO CO., LTD., trade name: SUV-381, a two-component curable primer containing a polyester-based resin as a main component);
(13) a primer B (manufactured by NIPPON KAKO TORYO CO., LTD., trade name: BRIGHTTK, a primer containing acrylic resin and a vinyl chloride-vinyl acetate copolymer as main components); and
(14) a one-component curable adhesive (manufactured by Japan Coating Resins Co., Ltd., trade name: RIKA BOND BA-53).

### (Example 1)

### <Production of Surface Layer>

First, the ultraviolet curable resin was applied to one surface of the transparent resin film A, which was then irradiated with an ultraviolet ray. Thus, a hard-coat layer was formed. Then, the gravure printing ink was applied to another surface of the transparent resin film A, opposite to the surface on which the hard-coat layer had been provided, by gravure printing, thereby forming a print layer. Accordingly, a surface layer was produced, which is a laminate in which the transparent resin layer, the print layer provided on the back surface of the transparent resin layer, and the hard-coat layer provided on the front surface of the transparent resin layer are stacked.

### <Production of Backer Layer>

First, a master batch (containing a color pigment and a PETG resin) was added to a PETG resin (manufactured by Eastman Chemical Company, trade name: GN071) as a main component, thereby preparing a resin mixture. Next, using an extruder (OSE-35φ mm extruder) manufactured by OSADA SEISAKUSHO Ltd., the resin mixture was molded at a temperature of 240°C and a screw rotation speed of 44 rpm, thereby obtaining the colored resin film A described above. Then, aluminum was vapor deposited on one surface of the colored resin film A by vacuum vapor deposition, thereby forming a vapor-deposited aluminum layer. The primer B described above was then applied to the surface of the vapor-deposited aluminum layer, thereby forming a primer layer. Accordingly, a backer layer was produced, which is a laminate in which the amorphous-state resin layer, the vapor-deposited metal layer provided on the surface of the amorphous-state resin layer, and the primer layer provided on the surface of the vapor-deposited metal layer are stacked.

### <Production of Decorative Sheet>

Next, the two-component curable adhesive described above was applied to the surface of the print layer in the surface layer at 10 g/m², by using a comma coater (registered trademark), and the solvent was volatilized in a drying oven. Then, the surface layer and the backer layer were stacked on each other via the adhesive such that the print layer with the adhesive applied thereto faces the primer layer in the backer layer. Subsequently, the print layer and the primer layer were bonded to each other by dry lamination using a nip roller heated at 50°C, so that the surface layer and the backer layer were adhered to each other. Thereafter, the resultant laminate was aged at 35°C for 72 hours. Thus, a decorative sheet of this Example (the total thickness of the decorative sheet: 210 µm) was produced.

### <Design Property Evaluation>

The decorative sheet produced was inspected by direct and oblique viewing with a distance of 30 cm from the decorative sheet under illumination of 500 lux, to evaluate design properties according to the following evaluation criteria. Table 1 shows the results.
∘: No scratching of the vapor-deposited metal layer, or no scraping of the color layer (amorphous-state resin layer) was observed.
×: Scratching of the vapor-deposited metal layer, or scraping of the color layer (amorphous-state resin layer) was observed.

### <Scratch Resistance Evaluation>

A cutter was moved 5 cm sideways while pressing the cutting edge of the cutter against the surface of the produced decorative sheet with the force of 100 g. This treatment was repeated five times, and the scratch resistance was evaluated according to the following evaluation criteria. Table 1 shows the results.
∘: The color layer (amorphous-state resin layer) was not scraped, and the vapor-deposited aluminum layer was not exposed.
×: The color layer (amorphous-state resin layer) was scraped, and the vapor-deposited aluminum layer was exposed.

### <Peel Strength Evaluation>

A strip-shaped sample having a width of 15 mm and a length of 100 mm was cut out from the produced decorative sheet and used as a sample. Next, a cutter was used to make a cut (15 mm) in the width direction against one layer (backer layer side) of this sample, and the cut was then folded. Then, the film of the one layer was peeled about 10 mm from the cut, and this peeled portion was used as a start point of delamination. If peeling at the cut was difficult, the cut was immersed in ethyl acetate for 30 seconds.

Then, the film of the one layer was peeled at a speed of 200 mm/min in a 90° direction by using a peel test machine (manufactured by Shimadzu Corporation, trade name: AUTOGRAPH AGS-500NJ+250), and the peel strength at 90° peeling was evaluated according to the following evaluation criteria. Table 1 shows the results.
∘: The peel strength was 10 N or higher.
×: The peel strength was less than 10 N.

The film of the one layer of another similar sample was peeled at 200 mm/min in a 180° direction by using the peel test machine described above, and the peel strength at 180° peeling was evaluated according to the following evaluation criteria. Table 1 shows the results.
∘: The peel strength was 15 N or higher.
×: The peel strength was less than 15 N.

### <Peel Durability Evaluation>

Samples were prepared by allowing the produced decorative sheet to stand at 70°C for one month and at 45°C and 95% RH for one month. Next, in the same manner as in the peel strength evaluation described above, the peel strength at 90° peeling was measured, and the decrease percentage [%] of the peel strength at 90° peeling after standing was calculated based on the following equation (1).
[Mathematical 1] Decrease percentage [%] of peel strength at 90° peeling after standing = [(peel strength at 90° peeling of sample before standing - peel strength at 90° peeling of sample after standing)/peel strength at 90° peeling of sample before standing] × 100

Then, the peel durability at 90° peeling was evaluated according to the following evaluation criteria. Table 1 shows the results.
∘: The decrease percentage [%] of peel strength at 90° peeling after standing ≤ 10
×: The decrease percentage [%] of peel strength at 90° peeling after standing > 10

The peel strength at 180° peeling after standing was measured in the same manner, and the decrease percentage [%] of the peel strength at 180° peeling after standing was calculated based on the following equation (2).
[Mathematical 2] Decrease percentage [%] of peel strength at 180° peeling after standing = [(peel strength at 180° peeling of sample before standing - peel strength at 180° peeling of sample after standing)/peel strength at 180° peeling of sample before standing] × 100

Then, the peel durability at 180° peeling was evaluated according to the following evaluation criteria. Table 1 shows the results.
∘: The decrease percentage [%] of peel strength at 180° peeling after standing ≤ 10
×: The decrease percentage [%] of peel strength at 180° peeling after standing > 10

### <Peel Interface Evaluation>

For each of the samples peeled in the peel strength evaluation and peel durability evaluation described above, the peel interface was evaluated according to the following evaluation criteria. Table 1 shows the results.
∘: Peeling did not occur at both upper and lower interfaces of the vapor-deposited metal layer.
×: Peeling occurred at either one of the upper or lower interface of the vapor-deposited metal layer, or breakage easily occurred at a peel strength of 5 N or less.

### (Example 2)

A decorative sheet was produced in the same manner as in Example 1 except that the colored resin film C was used instead of the colored resin film A, and the decorative sheet was subjected to a design property evaluation, scratch resistance evaluation, peel strength evaluation, peel durability evaluation, and peel interface evaluation. Table 1 shows the results.

The colored resin film C was obtained as follows. A color pigment and various additives (such as a heat stabilizer, a reinforcing agent, a processing aid, an internal lubricant, an external lubricant, a plate-out inhibitor) were added to a polyvinyl chloride resin (manufactured by Taiyo Vinyl Corporation, trade name: TE-650) as a main component, thereby preparing a resin mixture. Then, using an extruder (OSE-35φ mm extruder) manufactured by OSADA SEISAKUSHO Ltd., the resin mixture was molded at a temperature of 185°C and a screw rotation speed of 44 rpm.

### (Example 3)

A decorative sheet was produced in the same manner as in Example 1 except that the transparent resin film C was used instead of the transparent resin film A, and the decorative sheet was subjected to a design property evaluation, scratch resistance evaluation, peel strength evaluation, peel durability evaluation, and peel interface evaluation. Table 1 shows the results.

The transparent resin film C was obtained as follows. Various additives (such as a heat stabilizer, a reinforcing agent, a processing aid, an internal lubricant, an external lubricant, a plate-out inhibitor) were added to a polyvinyl chloride resin (manufactured by Taiyo Vinyl Corporation, trade name: E-650) as a main component, thereby preparing a resin mixture. Then, using an extruder (OSE-35φ mm extruder) manufactured by OSADA SEISAKUSHO Ltd., the resin mixture was molded at a temperature of 185°C and a screw rotation speed of 44 rpm.

### (Example 4)

A decorative sheet was produced in the same manner as in Example 1 except that the transparent resin film B was used instead of the transparent resin film A, that the colored resin film B was used instead of the colored resin film A, and further that a hard-coat layer was not formed, and the decorative sheet was subjected to a design property evaluation, scratch resistance evaluation, peel strength evaluation, peel durability evaluation, and peel interface evaluation. Table 1 shows the results.

The colored resin film B was obtained as follows. A master batch (containing a color pigment and a virgin A-PET resin (manufactured by China Resources Enterprise, Limited, trade name: CR8816) was added to an RPET-based resin (manufactured by ALIPLAST, trade name: Alimpet) as a main component, thereby producing a resin mixture. Then, using an extruder (OSE-35φ mm extruder) manufactured by OSADA SEISAKUSHO Ltd., the resin mixture was molded at a temperature of 265°C and a screw rotation speed of 44 rpm.

### (Example 5)

A decorative sheet was produced in the same manner as in Example 1 except that the transparent resin film C was used instead of the transparent resin film A, and that the colored resin film C was used instead of the colored resin film A, and the decorative sheet was subjected to a design property evaluation, scratch resistance evaluation, peel strength evaluation, peel durability evaluation, and peel interface evaluation. Table 1 shows the results.

### (Example 6)

A decorative sheet was produced in the same manner as in Example 1 except that the primer A was used instead of the primer B, and the decorative sheet was subjected to a design property evaluation, scratch resistance evaluation, peel strength evaluation, peel durability evaluation, and peel interface evaluation. Table 1 shows the results.

### (Comparative Example 1)

A decorative sheet was produced in the same manner as in Example 1 except that the primer layer was not formed, and the decorative sheet was subjected to a design property evaluation and scratch resistance evaluation. Table 2 shows the results.

In Comparative Example 1, the primer layer was not formed on the surface of the vapor-deposited metal layer. Thus, the vapor-deposited metal layer was scratched, thereby significantly decreasing design properties. In addition, because of the significant decrease in design properties, the peel strength evaluation, peel durability evaluation, and peel interface evaluation were not performed.

### (Comparative Example 2)

### <Production of Surface Layer>

A surface layer was produced in the same manner as in Example 1 except that the transparent resin film C was used instead of the transparent resin film A.

### <Production of Backer Layer>

The transparent resin film C was prepared instead of preparing the colored resin film A. Then, the primer A was applied to one surface of the transparent resin film C, thereby forming a primer layer A. Aluminum was vapor deposited on the surface of the primer layer A by vacuum vapor deposition, thereby forming a vapor-deposited aluminum layer. A primer B was applied to the surface of the vapor-deposited aluminum layer, thereby forming a primer layer B. Accordingly, a backer layer was produced which is a laminate in which the amorphous-state resin layer, the primer layer A provided on the surface of the amorphous-state resin layer, the vapor-deposited metal layer provided on the surface of the primer layer A, and the primer layer B provided on the surface of the vapor-deposited metal layer are stacked.

### <Production of Decorative Sheet>

Then, the surface layer and the backer layer were stacked on each other such that the print layer in the surface layer and the primer layer B in the backer layer face each other, and the print layer and the primer layer B were then bonded to each other by heat lamination using a heat lamination machine (velocity: 1.8 m/min, heat lamination rubber roller temperature: 170°C, pressure: 5 kg/cm), so that the surface layer and the backer layer were adhered to each other. Accordingly, a decorative sheet of Comparative Example 2 was produced.

Subsequently, the decorative sheet was subjected to the design property evaluation, scratch resistance evaluation, peel strength evaluation, peel durability evaluation, and peel interface evaluation in the same manner as in Example 1. Table 2 shows the results.

### (Comparative Example 3)

A decorative sheet was produced in the same manner as in Comparative Example 2 except that the transparent resin film D was used instead of the transparent resin film C in the backer layer, and the decorative sheet was subjected to a design property evaluation, scratch resistance evaluation, peel strength evaluation, peel durability evaluation, and peel interface evaluation. Table 2 shows the results.

### (Comparative Example 4)

### <Production of Surface Layer>

First, the gravure printing ink was applied to the surface of the transparent resin film A by gravure printing, thereby forming a print layer. The ultraviolet curable resin was then applied to the surface of the print layer, which was then irradiated with an ultraviolet ray. Thus, a hard-coat layer was formed. Then, the primer A was applied to the surface of the transparent resin film A, opposite to the surface on which the hard-coat layer had been formed, thereby forming a primer layer A. Aluminum was vapor deposited on the surface of the primer layer A by vacuum vapor deposition, thereby forming a vapor-deposited aluminum layer. The primer B was then applied to the surface of the vapor-deposited aluminum layer, thereby forming a primer layer B. Accordingly, a surface layer was formed.

### <Production of Decorative Sheet>

Only the colored resin film A was prepared as a backer layer. The two-component curable adhesive described above was applied to the surface of the primer layer B in the surface layer at 10 g/m², by using a comma coater (registered trademark), and the solvent was volatilized in a drying oven. Then, the surface layer and the backer layer were stacked on each other via the adhesive such that the primer layer B with the adhesive applied thereto faces the colored resin film A, which was the backer layer. Subsequently, the primer layer B and the colored resin film A were bonded to each other by dry lamination using a nip roller heated to 50°C, so that the surface layer and the backer layer were adhered to each other. Thereafter, the resultant laminate was aged at 35°C for 72 hours. Thus, a decorative sheet of Comparative Example 4 was produced.

Subsequently, the decorative sheet was subjected to the design property evaluation, scratch resistance evaluation, peel strength evaluation, peel durability evaluation, and peel interface evaluation in the same manner as in Example 1. Table 2 shows the results.

### (Comparative Example 5)

### <Production of Surface Layer>

First, the ultraviolet curable resin was applied to one surface of the transparent resin film A, which was then irradiated with an ultraviolet ray. Thus, a hard-coat layer was formed. Then, a mixture of the gravure printing ink and the primer A was applied, by gravure printing, to the surface of the transparent resin film A, opposite to the surface on which the hard-coat layer had been formed, thereby forming a print layer containing the primer A. Aluminum was vapor deposited on the surface of the print layer by vacuum vapor deposition, thereby forming a vapor-deposited aluminum layer. The primer B was then applied to the surface of the vapor-deposited aluminum layer, thereby forming a primer layer B. Accordingly, a surface layer was formed.

### <Production of Decorative Sheet>

The surface layer and the backer layer were adhered to each other in the same manner as in Comparative Example 4. Accordingly, a decorative sheet of Comparative Example 5 was produced.

Subsequently, the decorative sheet was subjected to the design property evaluation, scratch resistance evaluation, peel strength evaluation, peel durability evaluation, and peel interface evaluation in the same manner as in Example 1. Table 2 shows the results.

### (Comparative Example 6)

### <Production of Surface Layer>

First, the ultraviolet curable resin was applied to one surface of the transparent resin film A, which was then irradiated with an ultraviolet ray. Thus, a hard-coat layer was formed. Then, the gravure printing ink was applied to another surface of the transparent resin film A, opposite to the surface on which the hard-coat layer had been provided, by gravure printing, thereby forming a print layer. Then, the primer A was applied to the surface of the print layer, thereby forming a primer layer A. Aluminum was vapor deposited on the surface of the primer layer A by vacuum vapor deposition, thereby forming a vapor-deposited aluminum layer. The primer B was then applied to the surface of the vapor-deposited aluminum layer, thereby forming a primer layer B. Accordingly, a surface layer was formed.

### <Production of Decorative Sheet>

The surface layer and the backer layer were adhered to each other in the same manner as in Comparative Example 4. Accordingly, a decorative sheet of Comparative Example 6 was produced.

Subsequently, the decorative sheet was subjected to the design property evaluation, scratch resistance evaluation, peel strength evaluation, peel durability evaluation, and peel interface evaluation in the same manner as in Example 1. Table 2 shows the results.

### (Example 7)

### <Production of Surface Layer>

First, the ultraviolet curable resin was applied to one surface of the transparent resin film A, which was then irradiated with an ultraviolet ray. Thus, a hard-coat layer was formed. Then, the gravure printing ink was applied to another surface of the transparent resin film A, opposite to the surface on which the hard-coat layer had been provided, by gravure printing, thereby forming a print layer. Accordingly, a surface layer was produced, which is a laminate in which the transparent resin layer, the print layer provided on the back surface of the transparent resin layer, and the hard-coat layer provided on the front surface of the transparent resin layer are stacked.

### <Production of Backer Layer>

First, a master batch (containing a color pigment and a PETG resin) was added to a PETG resin (manufactured by Eastman Chemical Company, trade name: GN071) as a main component, thereby preparing a resin mixture. Next, using an extruder (OSE-35φ mm extruder) manufactured by OSADA SEISAKUSHO Ltd., the resin mixture was molded at a temperature of 240°C and a screw rotation speed of 44 rpm, thereby obtaining the colored resin film A described above. Then, the primer A was applied to one surface of the colored resin film A, thereby forming a primer layer. Aluminum was vapor deposited on the surface of the primer layer by vacuum vapor deposition, thereby forming a vapor-deposited aluminum layer. The two-component curable adhesive (viscosity: 80 mPa·s, surface tension: 21 mN/m) was applied to the surface of the vapor-deposited aluminum layer at 10 g/m², by using a comma coater (registered trademark), and the solvent was volatilized in a drying oven, thereby forming an adhesive layer serving also as a primer layer. Accordingly, a backer layer was produced which was a laminate in which the amorphous-state resin layer, the primer layer provided on the surface of the amorphous-state resin layer, the vapor-deposited metal layer provided on the surface of the primer layer, and the adhesive layer provided on the surface of the vapor-deposited metal layer are stacked.

### <Production of Decorative Sheet>

Thereafter, the surface layer and the backer layer were stacked on each other via the adhesive layer provided in the backer layer so that the print layer in the surface layer and the vapor-deposited metal layer in the backer layer face each other. Subsequently, the print layer and the adhesive layer were bonded to each other by dry lamination using a nip roller heated at 50°C, so that the surface layer and the backer layer were adhered to each other. Thereafter, the resultant laminate was aged at 35°C for 72 hours. Thus, a decorative sheet of this Example (the total thickness of the decorative sheet: 210 µm) was produced.

Subsequently, the decorative sheet was subjected to the design property evaluation, scratch resistance evaluation, peel strength evaluation, peel durability evaluation, and peel interface evaluation in the same manner as in Example 1. Table 3 shows the results.

For the design property evaluation, the decorative sheet produced was inspected by direct and oblique viewing with a distance of 30 cm from the decorative sheet under illumination of 500 lux, to evaluate the presence or absence of air bubbles in the adhesive layer according to the following evaluation criteria in addition to the evaluation according to the evaluation criteria in Example 1.
∘: No air bubbles were observed in the adhesive layer.
×: Air bubbles were observed in the adhesive layer.

### (Example 8)

A decorative sheet (the total thickness of the decorative sheet: 260 µm) was produced in the same manner as in Example 7 except that the colored resin film C was used instead of the colored resin film A, and the decorative sheet was subjected to a design property evaluation, scratch resistance evaluation, peel strength evaluation, peel durability evaluation, and peel interface evaluation. Table 3 shows the results.

### (Example 9)

A decorative sheet (the total thickness of the decorative sheet: 210 µm) was produced in the same manner as in Example 7 except that no primer layer was provided on the surface of the amorphous-state resin layer, and the decorative sheet was subjected to a design property evaluation, scratch resistance evaluation, peel strength evaluation, peel durability evaluation, and peel interface evaluation. Table 3 shows the results.

### (Example 10)

A decorative sheet (the total thickness of the decorative sheet: 260 µm) was produced in the same manner as in Example 7 except that the colored resin film C was used instead of the colored resin film A, and that no primer layer was provided on the surface of the amorphous-state resin layer, and the decorative sheet was subjected to a design property evaluation, scratch resistance evaluation, peel strength evaluation, peel durability evaluation, and peel interface evaluation. Table 3 shows the results.

### (Comparative example 7)

A decorative sheet (the total thickness of the decorative sheet: 210 µm) was produced in the same manner as in Example 7 except that a two-component curable adhesive (viscosity: 1050 mPa·s, surface tension: 30 mN/m) was used instead of the two-component curable adhesive (viscosity: 80 mPa·s, surface tension: 21 mN/m), and the decorative sheet was subjected to a design property evaluation, scratch resistance evaluation, peel strength evaluation, peel durability evaluation, and peel interface evaluation. Table 4 shows the results.

### (Comparative Example 8)

A decorative sheet (the total thickness of the decorative sheet: 280 µm) was produced in the same manner as in Example 7 except that a one-component curable adhesive (viscosity: 10 mPa·s, surface tension: 37 mN/m) was used instead of the two-component curable adhesive (viscosity: 80 mPa·s, surface tension: 21 mN/m), that the colored resin film C was used instead of the colored resin film A, and that no primer layer was provided on the surface of the amorphous-state resin layer, and the decorative sheet was subjected to a design property evaluation, scratch resistance evaluation, peel strength evaluation, peel durability evaluation, and peel interface evaluation. Table 4 shows the results.

### (Comparative Example 9)

A decorative sheet (the total thickness of the decorative sheet: 170 µm) was produced in the same manner as in Example 7 except that the crystalline transparent resin film A was used instead of the colored resin film A, and the decorative sheet was subjected to a design property evaluation, scratch resistance evaluation, peel strength evaluation, peel durability evaluation, and peel interface evaluation. Table 4 shows the results.

### (Comparative Example 10)

A decorative sheet (the total thickness of the decorative sheet: 75 µm) was produced in the same manner as in Example 7 except that the crystalline transparent resin film D was used instead of the colored resin film A, and the decorative sheet was subjected to a design property evaluation, scratch resistance evaluation, peel strength evaluation, peel durability evaluation, and peel interface evaluation. Table 4 shows the results.

**[Table 1]**

| | | Example 1 | Example 2 | Example 3 | Example 4 | Example 5 | Example 6 |
|---|---|---|---|---|---|---|---|
| Surface layer | Hard-coat layer | Ultraviolet curable resin | Ultraviolet curable resin | Ultraviolet curable resin | - | Ultraviolet curable resin | Ultraviolet curable resin |
| | Transparent resin layer | Transparent resin film A | Transparent resin film A | Transparent resin film C | Transparent resin film B | Transparent resin film C | Transparent resin film A |
| | Print layer | Gravure printing ink | | | | | |
| Adhesive layer | | Two-component curable adhesive | | | | | |
| Backer layer | Primer layer | Primer B | Primer B | Primer B | Primer B | Primer B | Primer A |
| | Vapor-deposited metal layer | Vapor-deposited aluminum layer | | | | | |
| | Amorphous-state resin layer | Color resin film A | Color resin film C | Color resin film A | Color resin film B | Color resin film C | Color resin film A |
| Entire thickness [µm] of decorative sheet | | 210 | 260 | 170 | 210 | 210 | 210 |
| Design properties | | ○ | ○ | ○ | ○ | ○ | ○ |
| Scratch resistance | | ○ | ○ | ○ | ○ | ○ | ○ |
| Peel strength | 90° | ○ | ○ | ○ | ○ | ○ | ○ |
| | 180° | ○ | ○ | ○ | ○ | ○ | ○ |
| Peel durability | 90° | ○ | ○ | ○ | ○ | ○ | ○ |
| | 180° | ○ | ○ | ○ | ○ | ○ | ○ |
| Peel interface | 90° | ○ | ○ | ○ | ○ | ○ | ○ |
| | 180° | ○ | ○ | ○ | ○ | ○ | ○ |

**[Table 2]**

| | | Comparative example 1 | Comparative example 2 | Comparative example 3 | Comparative example 4 | Comparative example 5 | Comparative example 6 |
|---|---|---|---|---|---|---|---|
| Surface layer | Hard-coat layer | Ultraviolet curable resin | Ultraviolet curable resin | Ultraviolet curable resin | Ultraviolet curable resin | Ultraviolet curable resin | Ultraviolet curable resin |
| | Print layer | - | - | - | Gravure printing ink | - | |
| | Transparent resin layer | Transparent resin film A | Transparent resin film C | Transparent resin film C | Transparent resin film A | Transparent resin film A | Transparent resin film A |
| | Print layer | Gravure printing ink | Gravure printing ink | Gravure printing ink | - | Gravure printing ink + Primer A | Gravure printing ink |
| | Primer layer A | - | - | - | Primer A | - | Primer A |
| | Vapor-deposited metal layer | - | - | - | Vapor-deposited aluminum layer | Vapor-deposited aluminum layer | Vapor-deposited aluminum layer |
| | Primer layer B | - | - | - | Primer B | Primer B | Primer B |
| Adhesive layer | | Two-component curable adhesive | - | - | Two-component curable adhesive | Two-component curable adhesive | Two-component curable adhesive |
| Backer layer | Primer layer B | - | Primer B | Primer B | - | - | - |
| | Vapor-deposited metal layer | Vapor-deposited aluminum layer | Vapor-deposited aluminum layer | Vapor-deposited aluminum layer | - | - | - |
| | Primer layer A | - | Primer A | Primer A | - | - | - |
| | Resin layer | Color resin film A | Transparent resin film C | Transparent resin film D | Color resin film A | Color resin film A | Color resin film A |
| Entire thickness [µm] of decorative sheet | | 210 | 170 | 75 | 210 | 210 | 210 |
| Design properties | | × | ○ | ○ | ○ | ○ | ○ |
| Scratch resistance | | ○ | ○ | ○ | × | ○ | ○ |
| Peel strength | 90° | - | × | × | × | × | × |
| | 180° | - | × | × | ○ | × | × |
| Peel durability | 90° | - | × | × | × | × | × |
| | 180° | - | × | × | × | × | × |
| Peel interface | 90° | - | × | × | × | × | × |
| | 180° | - | × | × | ○ | × | × |

**[Table 3]**

| | | Example 7 | Example 8 | Example 9 | Example 10 |
|---|---|---|---|---|---|
| Surface layer | Hard-coat layer | Ultraviolet curable resin | Ultraviolet curable resin | Ultraviolet curable resin | Ultraviolet curable resin |
| | Transparent resin layer | Transparent resin film A | Transparent resin film A | Transparent resin film A | Transparent resin film A |
| | Print layer | Gravure printing ink | Gravure printing ink | Gravure printing ink | Gravure printing ink |
| Backer layer | Adhesive layer (serving also as Primer layer) | Two-component curable adhesive | Two-component curable adhesive | Two-component curable adhesive | Two-component curable adhesive |
| | Vapor-deposited metal layer | Vapor-deposited aluminum layer | Vapor-deposited aluminum layer | Vapor-deposited aluminum layer | Vapor-deposited aluminum layer |
| | Primer layer | Primer A | Primer A | - | - |
| | Resin layer | Color resin film A | Color resin film C | Color resin film A | Color resin film C |
| Entire thickness [µm] of decorative sheet | | 210 | 260 | 210 | 260 |
| Adhesive | Viscosity [mPa · s] | 80 | 80 | 80 | 80 |
| | Surface tension [mN/m] | 21 | 21 | 21 | 21 |
| Design properties | Scratching of vapor-deposited metal layer or scraping of color layer | ○ | ○ | ○ | ○ |
| | Air bubbles in adhesive layer | ○ | ○ | ○ | ○ |
| Scratch resistance | | ○ | ○ | ○ | ○ |
| Peel strength | 90° | ○ | ○ | ○ | ○ |
| | 180° | ○ | ○ | ○ | ○ |
| Peel durability | 90° | ○ | ○ | ○ | ○ |
| | 180° | ○ | ○ | ○ | ○ |
| Peel interface | 90° | ○ | ○ | ○ | ○ |
| | 180° | ○ | ○ | ○ | ○ |

**[Table 4]**

| | | Comparative example 7 | Comparative example 8 | Comparative example 9 | Comparative example 10 |
|---|---|---|---|---|---|
| Surface layer | Hard-coat layer | Ultraviolet curable resin | Ultraviolet curable resin | Ultraviolet curable resin layer | Ultraviolet curable resin layer |
| | Transparent resin layer | Transparent resin film A | Transparent resin film A | Transparent resin film A | Transparent resin film A |
| | **Print** layer | Gravure printing ink | Gravure printing ink | Gravure printing ink | Gravure printing ink |
| Backer layer | Adhesive layer (serving also as Primer layer) | Two-component curable adhesive | One-component curable adhesive | Two-component curable adhesive | Two-component curable adhesive |
| | Vapor-deposited metal layer | Vapor-deposited aluminum layer | Vapor-deposited aluminum layer | Vapor-deposited aluminum layer | Vapor-deposited aluminum layer |
| | Primer layer | Primer A | - | Primer A | Primer A |
| | Resin layer | Color resin film A | Color resin film C | Transparent resin film A | Transparent resin film D |
| Entire thickness [µm] of decorative sheet | | 210 | 280 | 170 | 75 |
| Adhesive | Viscosity [mPa · s] | 1050 | 10 | 80 | 80 |
| | Surface tension [mN/m] | 30 | 37 | 21 | 21 |
| Design properties | Scratching of vapor-deposited metal layer or scraping of color layer | x | × | ○ | ○ |
| | Air bubbles in adhesive layer | x | × | ○ | ○ |
| Scratch resistance | | ○ | ○ | ○ | ○ |
| Peel strength | 90° | ○ | ○ | × | × |
| | 180° | ○ | ○ | × | × |
| Peel durability | 90° | ○ | ○ | × | × |
| | 180° | ○ | ○ | × | × |
| Peel interface | 90° | ○ | ○ | × | × |
| | 180° | ○ | ○ | × | × |

As can be seen from Table 1, the decorative sheets of Examples 1 to 6 are excellent in design properties and scratch resistance, high in peel strength and peel durability, and improved in adhesion at the interface of the vapor-deposited metal layer.

In contrast, in Comparative Example 2 in which the crystalline transparent resin film A was used as the base layer in the backer layer, peeling occurred between the transparent resin film A and the vapor-deposited metal layer, so that the peel strength and the peel durability were low, and the adhesion at the interface of the vapor-deposited metal layer was also low.

Further, in Comparative Example 3 in which the crystalline transparent resin film D was used as the base layer in the backer layer, peeling occurred between the transparent resin film D and the vapor-deposited metal layer, so that the peel strength and the peel durability were low, and the adhesion at the interface of the vapor-deposited metal layer was also low. In addition, since the transparent resin film D was crystalline and thin (12 µm), the transparent resin film D was broken.

In Comparative Example 4, the print layer was not provided on the surface of the transparent resin film A, opposite to the surface on which the hard-coat layer had been provided (i.e., the backer layer side), so that the colored resin film A was scraped, indicating inferior scratch resistance. In addition, peeling occurred between the vapor-deposited metal layer and the primer layer A. Thus, the peel strength at 90° peeling was low, and the adhesion at the interface of the vapor-deposited metal layer was low. Further, the peel durability at both 90° peeling and 180° peeling was low.

In Comparative Example 5 in which the mixture of the gravure printing ink and the primer A was applied to form the print layer containing the primer A, the function of the primer was inhibited. As a result, the peel strength and the peel durability were both low, and the adhesion at the interface of the vapor-deposited metal layer was low.

In Comparative Example 6 in which the print layer having no primer function was provided between the primer layer A and the transparent resin layer, the peel strength and the peel durability were both low, and the adhesion at the interface of the vapor-deposited metal layer was low.

As can be seen from Table 3, the decorative sheets of Examples 7 to 10 are excellent in design properties and scratch resistance, high in peel strength and peel durability, and improved in adhesion at the interface of the vapor-deposited metal layer.

In contrast, as can be seen from Table 4, in Comparative Example 7 in which the adhesive forming the adhesive layer had a high viscosity (1050 mPa·s), scratches in the vapor-deposited metal layer were observed, air bubbles were generated in the adhesive layer, and the design properties were significantly deteriorated.

In Comparative Example 8 in which the adhesive forming the adhesive layer had a large surface tension (37 mN/m), coatability to the vapor-deposited aluminum layer was poor, so that scratches in the vapor-deposited metal layer were observed, air bubbles were generated in the adhesive layer, and the design properties were significantly deteriorated.

In Comparative Example 9 in which the crystalline transparent resin film A was used as the base layer in the backer layer, peeling occurred between the transparent resin film A and the vapor-deposited metal layer, so that the peel strength and the peel durability were low, and the adhesion at the interface of the vapor-deposited metal layer was also low. Similarly, in Comparative Example 10 in which the crystalline transparent resin film D was used as the base layer in the backer layer, peeling occurred between the transparent resin film D and the vapor-deposited metal layer, so that the peel strength and the peel durability were low, and the adhesion at the interface of the vapor-deposited metal layer was also low.

### INDUSTRIAL APPLICABILITY

As can be seen from above, the present disclosure is suitable for a decorative sheet.

### DESCRIPTION OF REFERENCE CHARACTERS

- 1: Decorative Sheet
- 2: Surface Layer
- 3: Backer Layer
- 4: Adhesive Layer
- 5: Transparent Resin Layer
- 6: Print Layer
- 7: Hard-Coat Layer
- 8: Amorphous-State Resin Layer
- 9: Vapor-Deposited Metal Layer
- 10: Primer Layer
- 11: Fine Pore
- 20: Decorative Sheet

## Claims

1. A decorative sheet at least comprising:
a laminate including at least an amorphous-state resin layer (8), a vapor-deposited metal layer (9) provided on a surface of the amorphous-state resin layer (8), and a primer layer (10) provided on a surface of the vapor-deposited metal layer (9); and
a transparent resin layer (5) provided on a side of the laminate closer to the primer layer (10),
wherein the vapor-deposited metal layer (9) has a plurality of fine pores (11).

2. The decorative sheet of claim 1, wherein an adhesive layer (4) is provided between the transparent resin layer (5) and the primer layer (10).

3. The decorative sheet of claim 1 or 2, wherein the amorphous-state resin layer (8) has a thickness of 50 µm to 500 µm.

4. The decorative sheet of any one of claims 1 to 3, wherein the amorphous-state resin layer (8) is a color layer.

5. The decorative sheet of any one of claims 1 to 4, wherein at least one of the amorphous-state resin layer (8) or the transparent resin layer (5) is made from recycled polyethylene terephthalate-based resin.

6. The decorative sheet of any one of claims 1 to 5, wherein a print layer (6) is provided on a surface of the transparent resin layer (5) closer to the primer layer (10).

7. A decorative sheet at least comprising:
a laminate including at least an amorphous-state resin layer (8), a vapor-deposited metal layer (9) provided on a surface of the amorphous-state resin layer (8), and an adhesive layer (4) provided on a surface of the vapor-deposited metal layer (9); and
a transparent resin layer (5) provided on a side of the laminate closer to the adhesive layer (4),
wherein the vapor-deposited metal layer (9) has a plurality of fine pores (11), and
wherein an adhesive forming the adhesive layer (4) has a viscosity of from 1 mPa·s to 1000 mPa·s inclusive and a surface tension of from 20 mN/m to 32 mN/m inclusive.

8. The decorative sheet of claim 7, wherein the amorphous-state resin layer (8) has a thickness of 50 µm to 500 µm.

9. The decorative sheet of claim 7 or 8, wherein the amorphous-state resin layer (8) is a color layer.

10. The decorative sheet of any one of claims 7 to 9, wherein at least one of the amorphous-state resin layer (8) or the transparent resin layer (5) is made from recycled polyethylene terephthalate-based resin.

11. The decorative sheet of any one of claims 7 to 10, wherein a print layer (6) is provided on a surface of the transparent resin layer (5) closer to the adhesive layer (4).

## Patentansprüche

1. Dekorfolie, zumindest umfassend:
ein Laminat mit zumindest einer Schicht (8) aus amorphem Harz, einer auf einer Oberfläche der Schicht (8) aus amorphem Harz vorgesehenen aufgedampften Metallschicht (9) und einer auf einer Oberfläche der aufgedampften Metallschicht (9) vorgesehenen Grundierungsschicht (10); und
eine auf einer der Grundierungsschicht (10) zugewandten Seite des Laminats vorgesehene Schicht (5) aus transparentem Harz,
wobei die aufgedampfte Metallschicht (9) eine Vielzahl von feinen Poren (11) aufweist.

2. Dekorfolie nach Anspruch 1, wobei zwischen der Schicht (5) aus transparentem Harz und der Grundierungsschicht (10) eine Klebstoffschicht (4) vorgesehen ist.

3. Dekorfolie nach Anspruch 1 oder 2, wobei die Schicht (8) aus amorphem Harz eine Dicke von 50 µm bis 500 µm aufweist.

4. Dekorfolie nach einem der Ansprüche 1 bis 3, wobei die Schicht (8) aus amorphem Harz eine Farbschicht ist.

5. Dekorfolie nach einem der Ansprüche 1 bis 4, wobei die Schicht (8) aus amorphem Harz und/oder die Schicht (5) aus transparentem Harz aus recyceltem Polyethylenterephthalat-Harz ausgebildet sind/ist.

6. Dekorfolie nach einem der Ansprüche 1 bis 5, wobei auf einer der Grundierungsschicht (10) zugewandten Oberfläche der Schicht (5) aus transparentem Harz eine bedruckte Schicht (6) vorgesehen ist.

7. Dekorfolie, zumindest umfassend:
ein Laminat mit zumindest einer Schicht (8) aus amorphem Harz, einer auf einer Oberfläche der Schicht (8) aus amorphem Harz vorgesehenen aufgedampften Metallschicht (9) und einer auf einer Oberfläche der aufgedampften Metallschicht (9) vorgesehenen Klebstoffschicht (4); und
eine auf einer der Klebstoffschicht (4) zugewandten Seite des Laminats vorgesehene Schicht (5) aus transparentem Harz,
wobei die aufgedampfte Metallschicht (9) eine Vielzahl von feinen Poren (11) aufweist und
wobei ein die Klebstoffschicht (4) bildender Klebstoff eine Viskosität von 1 mPa·s bis einschließlich 1000 mPa·s und eine Oberflächenspannung von 20 mN/m bis einschließlich 32 mN/m aufweist.

8. Dekorfolie nach Anspruch 7, wobei die Schicht (8) aus amorphem Harz eine Dicke von 50 µm bis 500 µm aufweist.

9. Dekorfolie nach Anspruch 7 oder 8, wobei die Schicht (8) aus amorphem Harz eine Farbschicht ist.

10. Dekorfolie nach einem der Ansprüche 7 bis 9, wobei die Schicht (8) aus amorphem Harz und/oder die Schicht (5) aus transparentem Harz aus recyceltem Polyethylenterephthalat-Harz ausgebildet sind/ist.

11. Dekorfolie nach einem der Ansprüche 7 bis 10, wobei auf einer der Klebstoffschicht (4) zugewandten Oberfläche der Schicht (5) aus transparentem Harz eine bedruckte Schicht (6) vorgesehen ist.

## Revendications

1. Feuille décorative comprenant au moins :
un stratifié comportant au moins une couche (8) de résine amorphe, une couche (9) métallique déposée en phase vapeur prévue sur une surface de la couche (8) de résine amorphe et une couche primaire (10) prévue sur une surface de la couche (9) métallique déposée en phase vapeur ; et
une couche (5) de résine transparente prévue sur une face du stratifié faisant face à la couche primaire (10),
dans laquelle la couche (9) métallique déposée en phase vapeur a une pluralité de pores fins (11).

2. Feuille décorative selon la revendication 1, dans laquelle une couche (4) adhésive est prévue entre la couche (5) de résine transparente et la couche primaire (10).

3. Feuille décorative selon la revendication 1 ou 2, dans laquelle la couche (8) de résine amorphe a une épaisseur de 50 µm à 500 µm.

4. Feuille décorative selon l'une quelconque des revendications 1 à 3, dans laquelle la couche (8) de résine amorphe est une couche de couleur.

5. Feuille décorative selon l'une quelconque des revendications 1 à 4, dans laquelle au moins une parmi la couche (8) de résine amorphe ou la couche (5) de résine transparente est faite à partir de la résine de polyéthylène téréphtalate recyclé.

6. Feuille décorative selon l'une quelconque des revendications 1 à 5, dans laquelle une couche (6) imprimée est prévue sur une surface de la couche (5) de résine transparente faisant face à la couche primaire (10).

7. Feuille décorative comprenant au moins :
un stratifié comportant au moins une couche (8) de résine amorphe, une couche (9) métallique déposée en phase vapeur prévue sur une surface de la couche (8) de résine amorphe et une couche (4) adhésive prévue sur une surface de la couche (9) métallique déposée en phase vapeur ; et
une couche (5) de résine transparente prévue sur une face du stratifié faisant face à la couche (4) adhésive,
dans laquelle la couche (9) métallique déposée en phase vapeur a une pluralité de pores fins (11) et
dans laquelle un adhésif formant la couche (4) adhésive a une viscosité de 1 mPa·s à 1000 mPa·s inclus et une tension de surface de 20 mN/m à 32 mN/m inclus.

8. Feuille décorative selon la revendication 7, dans laquelle la couche (8) de résine amorphe a une épaisseur de 50 µm à 500 µm.

9. Feuille décorative selon la revendication 7 ou 8, dans laquelle la couche (8) de résine amorphe est une couche de couleur.

10. Feuille décorative selon l'une quelconque des revendications 7 à 9, dans laquelle au moins une parmi la couche (8) de résine amorphe ou la couche (5) de résine transparente est faite à partir de la résine de polyéthylène téréphtalate recyclé.

11. Feuille décorative selon l'une quelconque des revendications 7 à 10, dans laquelle une couche (6) imprimée est prévue sur une surface de la couche (5) de résine transparente faisant face à la couche (4) adhésive.
